# EUROPEAN PATENT APPLICATION

(11) **EP 3 729 969 A1**
(43) Date of publication of application: **28.10.2020**
(21) Application number: 18891496.4
(22) Date of filing: 21.12.2018
(51) Int. Cl.: A23G 1/36, A23D 9/00

(54) **OILY CONFECTION**

(30) Priority: 22.12.2017 JP 2017246622
(71) Applicant: The Nisshin OilliO Group, Ltd., Tokyo 104-8285 (JP)
(72) Inventor: OONISHI Kiyomi, Yokohama-shi, Kanagawa 235-8558 (JP); HACHIYA Iwao, Yokohama-shi, Kanagawa 235-8558 (JP); HATANAKA Wakako, Yokohama-shi, Kanagawa 235-8558 (JP); UEHARA Hidetaka, Yokohama-shi, Kanagawa 235-8558 (JP); LI Runli, Tokyo 104-8306 (JP); ISHIDA Akiko, Hachioji-shi, Tokyo 192-0919 (JP)
(74) Representative: Appleyard Lees IP LLP
(86) International application number: PCT/JP2018/047142
(87) International publication number: WO 2019/124528

(57) **Abstract**

[Problem to be Solved] Provision of an oily confectionery having an excellent melting feeling in the mouth even when eaten in a frozen state.

[Means to Solve the Problem]

The oily confectionery containing oils and fats according to the present invention contains as the oils and fats, more than 60 % by mass and 94.5 % by mass or less of a medium chain triacylglycerol and 5 % by mass or more and less than 40 % by mass of a laurin-based fat.

## Description

### BACKGROUND OF THE INVENTION

### Field of the Invention

The present invention relates to an oily confectionery, particularly an oily confectionery having an excellent melting feeling in the mouth even when eaten in a frozen state.

### Background Art

An oily confectionery is a confectionery in which oils and fats form a continuous phase, a typical example being chocolate. Chocolate is mainly made of sugar, cacao mass, milk powder, and cocoa butter, and is obtained by micronizing these ingredients, and performing cooling and solidification. Chocolate is solid at room temperature but melts quickly by the heat in the mouth when eaten. This is mainly due to the temperature characteristic of crystals of cocoa butter contained in the chocolate.

Chocolate can be eaten under room temperature, but can also be eaten frozen (having a product temperature of 0 °C or below) together with frozen confectioneries such as ice-cream. In this case, if the oil and fat contained in the chocolate is cocoa butter, one feels extremely hard texture at the initial bite, and also the melting feeling in the mouth is considerably inferior to that of the frozen confectionery. For example, Patent Document 1 discloses an oily food material for a frozen confectionery comprising an oil and fat containing POP and also an oil and fat containing a large amount of lauric acid as a constituent fatty acid in order to obtain an excellent melting feeling in the mouth even when eaten in a frozen state.

### Prior art documents

### Patent Documents

Patent Document 1: Japanese Unexamined Patent Application Publication No. 2006-280209

### SUMMARY OF THE INVENTION

### Problem to be solved by the invention

However, the chocolate using an oily food material for frozen confectionery described in Patent Document 1 fails to provide a satisfactory melting feeling in the mouth even when it was eaten in a frozen state.

Accordingly, the object of the present invention is to develop an oily confectionery having an excellent melting feeling in the mouth even when eaten in a frozen state.

### Means for solving the problem

The present inventors have intensively studied to solve the above-mentioned problem. As a result, the present inventors have found that an excellent melting feeling in the mouth can be obtained even when the oily food is eaten in a frozen state when a specific amount of medium chain triacylglycerol was contained in oils and fats of an oily confectionery. However, when the proportion of the medium chain triacylglycerol in the oils and fats was increased, the entire surface of the frozen oily confectionery was found to turn white. The present inventors have conducted further studies. As a result, the present inventors have found that the whitening phenomenon is suppressed when a specific amount of laurin-based fat is further included in the oils and fats of the oily confectionery. Accordingly, the present invention has been completed.

That is, the present invention provides:
(1) An oily confectionery containing oils and fats, wherein the oils and fats contain more than 60 % by mass and 94.5 % by mass or less of a medium chain triacylglycerol and 5 % by mass or more and less than 40 % by mass of a laurin-based fat.
(2) The oily confectionery according to (1), wherein the laurin-based fat is one or more types selected from palm kernel oil, coconut oil, and processed fats thereof.
(3) The oily confectionery according to (1) or (2), wherein the content of the oils and fats is 20% by mass or more and 60% by mass or less.
(4) The oily confectionery according to any of (1) to (3), which is a frozen confectionery.
(5) The oily confectionery according to any of (1) to (4), which is a block or in a plate-form.
(6) The oily confectionery according to any of (1) to (5), which is chocolate.
(7) An oil and fat composition for a frozen confectionery, containing more than 60 % by mass and 94.5 % by mass or less of a medium chain triacylglycerol and 5 % by mass or more and less than 40 % by mass of a laurin-based fat.

### EFFECT OF THE INVENTION

The present invention can provide an oily confectionery having an excellent melting feeling in the mouth even when eaten in a frozen state. The present invention can also provide the oily confectionery having suppressed whitening phenomenon in a frozen state. The present invention can also provide an oil and fat composition for a frozen confectionery, from which an excellent melting feeling in the mouth can be obtained even when eaten in a frozen state.

### DETAILED DESCRIPTION OF THE INVENTION

### MODE FOR CARRYING OUT THE INVENTION

The present invention will be described in more details below. The oily confectionery according to the present invention is a food product obtained by suspending an edible component, for example, a finely micronized product such as cocoa powder, saccharides and milk solid, in a matrix formed of a continuous phase of oils and fats. Optionally, various additives, flavorings, and the like may be added. Examples of an oily confectionery include chocolate, fat cream, butter cream, and the like. For example, chocolate is not limited to that specified in the "Code of Fair Competition for Labeling of Chocolates" (National Chocolate Industry Fair Trade Council) or regulations. Chocolate includes edible oils and fats and sugars as the main raw materials. To the main raw materials are added, cacao ingredients (cacao mass, cocoa powder, etc.), dairy products, flavorings, emulsifying agents, and the like as required. Such chocolate is manufactured through processes of chocolate manufacturing (all or partially of a mixing process, a micronization process, a refining process, a molding process, a cooling process, and the like). Chocolate according to the present invention includes white and colored chocolates in addition to dark and milk chocolates.

The oily confectionery of the present invention has an excellent melting feeling in the mouth even when eaten in a frozen state. In the present invention, the term "frozen confectionery" refers to one eaten in a frozen state, and the term "frozen state" refers to a state in which the temperature of the oily confectionery is 0 °C or below. In the frozen state, the temperature of the oily confectionery is preferably -10 to -30 °C, and more preferably -15 to -25 °C.

The oily confectionery of the present invention preferably contains 20 to 60% by mass, more preferably 25 to 60% by mass, and further more preferably 30 to 55% by mass of oils and fats. The oils and fats comprised in the oily confectionery of the present invention are not only the oil and fat per se such as cocoa butter, but also the total of all oils and fats contained in the raw materials of the oily confectionery such as cacao mass, cocoa powder, and whole fat milk powder. For example, in general, the oil and fat content of cacao mass (cocoa butter) is 55 % by mass (oil content rate 0.55), the oil and fat content of cocoa powder (cocoa butter) is 11 % by mass (oil content rate 0.11), and the oil and fat content of whole fat milk powder (milk fat) is 25 % by mass (oil content 0.25), thus the content of oils and fats contained in the oily confectionery is the total value obtained from multiplying the blended amount (% by mass) in the oily confectionery of each raw material by the oil content rate.

The oily confectionery of the present invention contains more than 60% by mass and 94.5% by mass or less of a medium chain triacylglycerol (hereinafter sometimes referred to as MCT) in the oils and fats. Here, the medium chain triacylglycerol is a triacylglycerol in which three fatty acid molecules having 6 to 10 carbons are ester-bonded to one glycerol molecule. These three fatty acids may all be the same, or different fatty acids may be contained. In addition, the MCT may be a mixture of a plurality of different compounds. Examples of such mixtures include a mixture of trioctanoyl glycerol and tridecanoyl glycerol. The constituent fatty acids having 6 to 10 carbons are preferably linear saturated fatty acids, and are preferably n-hexanoic acid, n-octanoic acid, and n-decanoic acid. The content of MCT in the oils and fats contained in the oily confectionery is preferably 70 to 92.5 % by mass, more preferably 75 to 90.5 % by mass, and most preferably 80 to 90.5 % by mass. When the content of MCT in the oils and fats contained in the oily confectionery is within the above ranges, the oily confectionery will have a moderate hardness at the initial bite and an excellent melting feeling in the mouth even when eaten in a frozen state.

With respect to the MCT above, the constituent fatty acid having 6 carbons out of the total constituent fatty acids in the MCT are contained preferably in 10% by mass or less and more preferably 0 to 5% by mass. The constituent fatty acid having 8 carbons out of the total amount of the constituent fatty acids in the MCT are contained preferably in 90% by mass or less, more preferably in 80% by mass or less, further more preferably in 10% by mass to 60% by mass, and most preferably in 20% to 40% by mass. With respect to the MCT above, the constituent fatty acid having 10 carbons out of the total constituent fatty acids are contained preferably in 10% by mass or more, more preferably in 20% to 100% by mass, further more preferably in 40% to 90% by mass, and most preferably in 60% to 80% by mass. Further, with respect to the MCT, the constituent fatty acid having 10 carbons is contained more than the constituent fatty acid having 8 carbons in the total amount of the constituent fatty acid. When the composition of the constituent fatty acid of the MCT contained in the oily confectionery of the present invention is within the above-mentioned ranges, the oily confectionery has a moderate hardness at the initial bite and an excellent melting feeling in the mouth even when eaten in a frozen state. The constituent fatty acids of MCT can be measured by gas chromatography (based on AOCS Celf-96).

The oily confectionery of the present invention contains 5% by mass or more and less than 40% by mass of a laurin-based fat in the oils and fats. Here, the laurin-based fat is a fat in which the content of lauric acid in the total amount of constituent fatty acids of the oils and fats is 20 to 80 % by mass and in which the content of saturated fatty acid having 16 or more carbons is 50 % by mass or less. The content of lauric acid in the total amount of the constituent fatty acids of the lauric acid-based fat is preferably 30 to 70 % by mass and more preferably 35 to 65 % by mass. The content of the saturated fatty acid having 16 or more carbons in the total amount of the constituent fatty acids of the lauric acid-based fat is preferably 0 to 40 % by mass and more preferably 5 to 25 % by mass. The content of the laurin-based fat in the oils and fats contained in the oily confectionery of the present invention is preferably 7 to 30 % by mass, more preferably 9 to 25 % by mass, and most preferably 9 to 20 % by mass. When the content of the laurin-based fat in the oils and fats contained in the oily confectionery of the present invention is within the above ranges, the whitening phenomenon of the oily confectionery in the frozen state is suppressed without impairing the melting feeling in the mouth of the oily confectionery.

More specific examples of the above-described laurin-based fat include palm kernel oil, coconut oil, babasu oil, tucum oil, muru muru oil, and ouricuri oil. Further, included are processed oils and fats which are obtained by one or more processing treatments selected from mixing, fractionation, hydrogenation, and interesterification. One or more of laurin-based fat(s) selected from these may be used. The laurin-based fat is preferably palm kernel stearin obtained by separating palm kernel oil and/or hydrogenated oil of palm kernel stearin.

The oily confectionery of the present invention may use any oily raw materials as long as the effect of the present invention is not impaired and the materials are suitable for edible use, other than containing more than 60 % by mass and 94.5 % by mass or less of a medium chain triacylglycerol and 5 % by mass or more and less than 40 % by mass of a laurin-based fat in the oils and fats of said oily confectionery. For example, use can be made to palm oil, palm fractionated oil (palm olein, palm super olein, and the like), shea fat, shea fractionated oil, shorea fat, shorea fractionated oil, illipe fat, soybean oil, rapeseed oil, cotton seed oil, safflower oil, sunflower oil, rice oil, corn oil, sesame oil, olive oil, milk fat, and cocoa butter, and mixture oil and processed oils and fats containing thereof. The content of oils and fats other than the medium chain triacylglycerol and laurin-based fat contained in the oils and fats of the oily food product of the present invention is preferably 0.5 to 30 % by mass, more preferably 0.5 to 20 % by mass, and further preferably 0.5 to 10 % by mass.

The oily confectionery of the present invention preferably contains sugars in addition to the oils and fats. For example, use can be made to sugars such as sucrose (sugar and powdered sugar), lactose, glucose, fructose, maltose, reduced starch saccharified product, liquid sugar, enzymatically converted starch syrup, isomerized liquid sugar, sucrose-coupling starch syrup, reduced sugar polydextrose, oligosaccharide, sorbitol, reduced lactose, trehalose, xylose, xylitose, maltitol, erythritol, mannitol, raffinose, and dextrins. The content of the sugars in the oily confectionery of the present invention is preferably 25 to 55 % by mass, more preferably 30 to 55 % by mass, and further preferably 30 to 50 % by mass.

In the oily confectionery of the present invention, raw materials which are generally blended in the oily confectioneries can be used in addition to the oils and fats and sugars. Specifically, use can be made to, for example, dairy products such as whole fat milk powder and skim milk powder, cocoa ingredients such as cacao mass and cocoa powder, various powders such as soybean flour, soybean protein, processed fruit products, processed vegetable products, powdered green tea, and powdered coffee, gums, starches, emulsifiers, antioxidants, colorants, and flavorings.

The oily confectionery of the present invention can be produced by a conventionally known method. In the case where the oily food product of the present invention is chocolate, for example, an oil and fat, a cacao ingredient, sugar, a dairy product, an emulsifying agent, and the like can be used as the raw materials for production. Chocolate can be produced through a mixing step, a micronization step (refining), a refining step (conching), a tempering step (if necessary), a cooling step, and the like.

The oily confectionery of the present invention has an excellent melting feeling in the mouth even when eaten in a frozen state. The oily confectionery of the present invention can be eaten as is, as a mold-released, cut or squeezed-out block. It can also be used as a coating material, a filling material, or a chip material to be mixed into dough for frozen confectioneries such as ice-creams, ice bars, sherbets, or frozen cream puffs.

The oil and fat composition contains more than 60 % by mass and 94.5 % by mass or less of a medium chain triacylglycerol, and 5 % by mass or more and less than 40 % by mass of a laurin-based fat. The use of such an oil and fat composition for a frozen confectionery provides an excellent melting feeling in the mouth. As for the oil and fat composition, any fat raw materials may be used in addition to the medium chain triacylglycerol and the laurin-based fat, as long as the effect of the present invention is not impaired and the materials are suitable for edible use. The details of the oils and fats contained in the oil and fat composition are as mentioned above.

### EXAMPLES

The present invention will be described more specifically with reference to the following examples. However, the present invention is not limited by these Examples.

### <Preparation of Raw Oil and Fat>

The following oils and fats were used as the raw oils and fats.

### [MCT 1]

MCT (manufactured by The Nisshin OilliO Group, Ltd.) having only n-octanoic acid (carbon number 8) and n-decanoic acid (carbon number 10) as the constituent fatty acids, in which the mass ratio of the n-octanoic acid to the n-decanoic acid as the constituent fatty acids is 30:70 was used as MCT 1.

### [MCT 2]

MCT (manufactured by The Nisshin OilliO Group, Ltd.) having only n-octanoic acid (carbon number 8) and n-decanoic acid (carbon number 10) as constituent fatty acids, in which the mass ratio of the n-octanoic acid to the n-decanoic acid as the constituent fatty acids is 60:40 was used as MCT 2.

### [Laurin-based Fat 1]

Coconut oil (product name: purified coconut oil, manufactured by The Nisshin OilliO Group, Ltd., having a lauric acid content of 45.3% by mass and a content of saturated fatty acid having 16 or more carbons of 12.3% by mass) was used as Laurin-based fat 1.

### [Laurin-based Fat 2]

Palm kernel stearin extremely hydrogenated oil (manufactured by The Nisshin OilliO Group, Ltd.. having a lauric acid content of 53.9% by mass and a content of saturated fatty acid having 16 or more carbons of 18.5% by mass) was used as Laurin-based fat 2.

### [Laurin-based Fat 3]

Randomly interesterified fat of a mixed fat of palm stearin, palm mid fraction (PMF), and palm kernel extremely hydrogenated oil (manufactured by The Nisshin OilliO Group, Ltd., having a lauric acid content of 22.1% by mass and a content of saturated fatty acid having 16 or more carbons of 44.7% by mass) was used as Laurin-based fat 3.

### [Other Fat 1]

Trilaurin (product name: Trilaurin, manufactured by Tokyo Chemical Industry Co., Ltd., having a lauric acid content of 99.2% by mass and a content of saturated fatty acid having 16 or more carbons of 0% by mass) was used as Other Fat 1.

### [Other Fat 2]

Fat obtained by random interesterification of a mixed fat of palm stearin and palm kernel olein and subsequent extreme hydrogenation thereof (manufactured by The Nisshin OilliO Group, Ltd., having a lauric acid content of 20.3% by mass and a content of saturated fatty acid having 16 or more carbons of 69.0% by mass) was used as Other Fat 2.

### [Other Fat 3]

Palm stearin (manufactured by The Nisshin OilliO Group, Ltd., having a lauric acid content of 0.2% by mass and a content of saturated fatty acid having 16 or more carbons of 68.0% by mass) was used as Other Fat 3.

### [Other Fat 4]

Palm extremely hydrogenated oil (manufactured by The Nisshin OilliO Group, Ltd., having a lauric acid content of 0.2% by mass and a content of saturated fatty acid having 16 or more carbons of 98.5% by mass) was used as the Other Fat 4.

### <Analysis Method>

The constituent fatty acids of the oils and fats were determined by gas chromatography (according to AOCS Celf-96).

### <Preparation 1 of Chocolates>

Chocolates of Examples 1 to 4 and Comparative Examples 1 to 6 were prepared using the ingredient formulations in Tables 1 and 2. That is, melted chocolates, which had been subjected to the steps of mixing, refining, and conching in accordance with ordinary methods, were cooled and solidified using a mold. The quality of the obtained chocolates was evaluated by the method described later.

**[Table 1]**

| [Table 1] Formulation and Evaluation of Chocolates | | | | | |
|---|---|---|---|---|---|
| | Comp. Ex 1 | Example 1 | Example 2 | Example 3 | Example 4 |
| Formulation of Raw materials (% by mass) | | | | | |
| MCT1 | 42.43 | 38.05 | 38.05 | - | 35.86 |
| MCT2 | - | - | - | 38.05 | - |
| Laurin-based fat 1 | - | 4.38 | - | - | - |
| Laurin-based fat 2 | - | - | 4.38 | 4.38 | - |
| Laurin-based fat 3 | - | - | - | - | 6.57 |
| Other Fat 1 | - | - | - | - | - |
| Other Fat 2 | - | - | - | - | - |
| Other Fat 3 | - | - | - | - | - |
| Other Fat 4 | - | - | - | - | - |
| Cocoa Powder | 12.00 | 12.00 | 12.00 | 12.00 | 12.00 |
| Powder Sugar (Sugar) | 45.37 | 45.37 | 45.37 | 45.37 | 45.37 |
| Emulsifier | 0.2 | 0.2 | 0.2 | 0.2 | 0.2 |
| Total of Raw materials | 100 | 100 | 100 | 100 | 100 |
| Content of oils and fats of chocolate (% by mass) | 43.75 | 43.75 | 43.75 | 43.75 | 43.75 |
| in oils and fats of chocolate: | | | | | |
| MCT content (% by mass) | 96.98 | 86.97 | 86.97 | 86.97 | 79.04 |
| Laurin-based fat content (% by mass) | - | 10.01 | 10.01 | 10.01 | 15.02 |
| Evaluation Result | | | | | |
| Mold release | ⊚ | ⊚ | ⊚ | ○ | ⊚ |
| Whitening | × | ⊚ | ⊚ | ⊚ | ⊚ |
| Initial bite and melting feeling in the mouth | ⊚ | ⊚ | ⊚ | ⊚ | ⊚ |

**[Table 2]**

| [Table 2] Formulation and Evaluation of Chocolates | | | | | |
|---|---|---|---|---|---|
| | Comp. Ex 2 | Comp. Ex 3 | Comp. Ex 4 | Comp. Ex 5 | Comp. Ex 6 |
| Formulation of Raw materials (% by mass) | | | | | |
| MCT1 | 38.05 | 38.05 | 35.86 | 38.05 | 38.05 |
| MCT2 | - | - | - | - | - |
| Laurin-based fat 1 | - | - | - | - | - |
| Laurin-based fat 2 | - | - | - | - | - |
| Laurin-based fat 3 | - | - | - | - | - |
| Other Fat 1 | 4.38 | - | - | - | - |
| Other Fat 2 | - | 4.38 | 6.57 | - | - |
| Other Fat 3 | - | - | - | 4.38 | - |
| Other Fat 4 | - | - | - | - | 4.38 |
| Cocoa Powder | 12.00 | 12.00 | 12.00 | 12.00 | 12.00 |
| Powder Sugar (Sugar) | 45.37 | 45.37 | 45.37 | 45.37 | 45.37 |
| Emulsifier | 0.2 | 0.2 | 0.2 | 0.2 | 0.2 |
| Total of Raw materials | 100 | 100 | 100 | 100 | 100 |
| Content of oils and fats of chocolate (% by mass) | 43.75 | 43.75 | 43.75 | 43.75 | 43.75 |
| in oils and fats of chocolate: | | | | | |
| MCT content (% by mass) | 86.97 | 86.97 | 79.04 | 86.97 | 86.97 |
| Laurin-based fat content (% by mass) | | | | | |
| I Evaluation Result | | | | | |
| Mold release | ⊚ | ⊚ | ⊚ | ⊚ | ⊚ |
| Whitening | × | × | × | × | × |
| Initial bite and melting feeling in the mouth | ⊚ | ⊚ | Δ | Δ | × |

### <Evaluation 1 of Chocolates >

The chocolates of Examples 1 to 4 and Comparative Examples 1 to 6 produced by the above-described method were evaluated according to the following evaluation standards for mold release, whitening, initial bite, and melting feeling in the mouth. The evaluation results are shown in Tables 1 and 2.

### < Chocolate Evaluation Method >

### (1) Evaluation Method of Mold release

The chocolates were cooled and solidified at -20 °C and evaluated for mold release after 15 minutes.
⊚ : Chocolate was released from mold very well (almost entirely released).
O : Chocolate was released from mold well (slight adhered portions were present).
Δ : A part of chocolate was not released from mold.
× : Chocolate was not released from mold.

### (2) Evaluation Method of Whitening

The surface condition of chocolates which were left in the freezer at -20 °C for 3 days was evaluated.
⊚ : Surface was good with no whitening
Δ : Surface was slightly whitened
× : Surface was entirely whitened

### (3) Evaluation Method of Initial Bite and Melting Feeling in the Mouth

The melting feeling in the mouth of chocolates which were left in a freezer at -20 °C for 3 days was subjected for overall evaluation by 5 panelists in accordance with the following criteria.
⊚ : Chocolate had a moderate initial bite and a very good melting feeling in the mouth regardless of the product temperature of -20 °C.
O : Chocolate had a good melting feeling in the mouth regardless of the product temperature of -20 °C.
Δ : Chocolate was slightly hard at the initial bite with an unmelted feeling.
X : Chocolate was very hard at the initial bite with a strong unmelted feeling.

### < Preparation 2 and Evaluation 2 of Chocolate >

Chocolates of Examples 5 to 7 and Comparative Examples 7 and 8 were produced using the ingredient formulations in Table 3. That is, the melted chocolates which had been subjected to each step of mixing, refining, and conching in accordance with the ordinary methods were cooled and solidified using a mold. The quality of the obtained chocolates was evaluated in the same manner as in Evaluation 1 of Chocolates. The evaluation results are shown in Table 3.

**[Table 3]**

| [Table 3] Formulation and Evaluation of Chocolates | | | | | |
|---|---|---|---|---|---|
| | Comp. Ex 7 | Example 5 | Example 6 | Example 7 | Comp. Ex 8 |
| Formulation of Raw materials (% by mass) | | | | | |
| MCT1 | 41.55 | 38.93 | 35.86 | 30.17 | 20.53 |
| MCT2 | - | - | - | - | - |
| Laurin-based fat 1 | - | - | - | - | - |
| Laurin-based fat 2 | 0.88 | 3.50 | 6.57 | 12.26 | 21.90 |
| Laurin-based fat 3 | - | - | - | - | - |
| Other Fat 1 | - | - | - | - | - |
| Other Fat 2 | - | - | - | - | - |
| Other Fat 3 | - | - | - | - | - |
| Other Fat 4 | - | - | - | - | - |
| Cocoa Powder | 12.00 | 12.00 | 12.00 | 12.00 | 12.00 |
| Powder Sugar (Sugar) | 45.37 | 45.37 | 45.37 | 45.37 | 45.37 |
| Emulsifier | 0.2 | 0.2 | 0.2 | 0.2 | 0.2 |
| Total of Raw materials | 100 | 100 | 100 | 100 | 100 |
| Content of oils and fats of chocolate (% by mass) | 43.75 | 43.75 | 43.75 | 43.75 | 43.75 |
| in oils and fats of chocolate: | | | | | |
| MCT content (% by mass) | 94.97 | 88.98 | 79.04 | 68.96 | 46.93 |
| Laurin-based fat content (% by mass) | 2.12 | 8.00 | 15.02 | 28.02 | 50.06 |
| Evaluation Result | | | | | |
| Mold release | ⊚ | ⊚ | ⊚ | ⊚ | ⊚ |
| Whitening | x | ⊚ | ⊚ | ⊚ | ⊚ |
| Initial bite and melting feeling in the mouth | ⊚ | ⊚ | ⊚ | ○ | Δ |

## Claims

1. An oily confectionery containing oils and fats, wherein
the oils and fats contain more than 60 % by mass and 94.5 % by mass or less of a medium chain triacylglycerol and 5 % by mass or more and less than 40 % by mass of a laurin-based fat.

2. The oily confectionery according to claim 1, wherein
the laurin-based fat is one or more selected from palm kernel oil, coconut oil, and processed oils and fats thereof.

3. The oily confectionery according to claim 1 or 2, wherein
the content of the oils and fats is 20 % by mass or more and 60 % by mass or less.

4. The oily confectionery according to any one of claims 1 to 3, wherein
the oily confectionery is a frozen confectionery.

5. The oily confectionery according to any one of claims 1 to 4, wherein
the oily confectionery is a block or in a plate-form.

6. The oily confectionery according to any one of claims 1 to 5, wherein
the oily confectionery is chocolate.

7. An oil and fat composition for a frozen confectionery containing more than 60 % by mass and 94.5 % by mass or less of a medium chain triacylglycerol and 5 % by mass or more and less than 40 % by mass of a lauric-based oil.
